# EUROPEAN PATENT APPLICATION

(11) **EP 2 762 280 A1**
(43) Date of publication of application: **06.08.2014**
(21) Application number: 13466009.1
(22) Date of filing: 21.06.2013
(51) Int. Cl.: B25J 9/10, B25J 18/06

(54) **Manipulator**

(30) Priority: 25.06.2012 CZ 20120432
(71) Applicant: CVUT V Praze, Fakulta Strojní, 166 07 Praha 6 (CZ); Compotech Plus s.r.o., 34201 Susice (CZ)
(72) Inventor: Valasek, Michael, 14300 Praha 4 (CZ); Rusicka, Milan, 14000 Praha 4 (CZ); Uher, Ondrej, 34201 Susice (CZ)
(74) Representative: Novotny, Karel

(57) **Abstract**

The subject matter of the invention is the manipulator containing an arm consisting of at least one member movably connected to a frame, where a member of the manipulator arm is created by a membrane (2) the cavity of which is filled with medium of higher or lower pressure with respect to the ambient environment and is equipped with a joint for connecting to another member or the frame (22). A member of the manipulator arm is the element (1) filled with medium of higher pressure than the pressure of ambient environment and/or the element (6) filled with medium of lower pressure than the pressure of ambient environment with cavity filled with reinforcing elements (7). The membrane (2) is equipped with at least one place of curvature change (4) and/or a place of rigidity change (5) which creates a flexible joint.

## Description

### Technical Field

The invention concerns a manipulator consisting of an arm composed of at least one member movably connected to a frame.

### State-of-the-art

Today's industrial robots and manipulators are mostly made of metal components. Their arms are quite rigid, but also heavy. As consequences there are their considerable weight that must be always transported by the industrial robot and manipulator from which rather significant inertial forces arise and rather low own frequencies which worked-up by the movement. Final results are decrease of movement speed, increase of manipulation times, limitation of weight of transported bodies and inaccuracies in movement and final positioning.

That is why other ways of constructing robots and manipulators are being looked for. Changes of their structure or materials are taken into account. One of the ways of solution is to replace serial kinematic structure of most of today's industrial robots and manipulators with parallel kinematic structure. Then the improvement will be achieved by replacing bending stress of the robot arms by tensile and compression stresses and by the fact that the drives do not move with the arms but are fixed to the frame permanently. The final result may be e.g. replacing robots of Scara type with robots of Delta type. The rigidity to weight and acceleration to weight ratios will be improved, but the achievable working area to area occupied by the industrial robot or manipulator ratio will be reduced.

Another way of solution is replacing the serial kinematic structure of industrial robots and manipulators with parallel kinematic structure, but using excessive number of drives. This will result in increased and more uniform properties of industrial robots and manipulators within their working area. The final result may be e.g. replacing robots of Hexapod type with robots of Octapod type. Further, the excessive drives serve as a basis for usage of rope and fiber driven robots and manipulators. The working area problem is improved, but not solved completely. An industrial robot or manipulator with serial kinematic structure is of a thinner construction and is able to fit in narrower areas.

The third method of solution is replacing the material the industrial robots and manipulators are made of. Changing of construction inner structure (cross-section, profile) of arms of industrial robots and manipulators belongs in this category. The result will be a decrease of weight while maintaining the rigidity and thus an increase of own frequencies. The final result may be e.g. replacing metal materials with composites, e.g. with carbon composites, or application of metal foams or sandwich or rope structures, e.g. rope lattice structures. Structures of Tensairity type belong to this method of solution as well, these consist of connected inflated bodies of a beam type wrapped with ropes and, in some case, reinforced with constructional elements to prevent buckling (e.g. with rods). Structures of this type are, however, used for static constructions with no movable joints. Inflatable constructions are used for industrial robots and manipulators but they are equipped with a source of compressed air and by inflation their rigidity is being changed together with their shape too, which is undesirable.

Changes in material and construction of arms bring improvement but improvement of properties is still not satisfactory. Another problem is that these construction solutions of industrial robots and manipulators require metal components for construction of joints and drives. For some applications, where construction made entirely of deformable materials (e.g. carbon composites) is required, this is not desirable. It concerns e.g. manipulation of components of press-machines. The reason is that, sometimes, robot breakdown occurs and an arm of a robot is compressed with press together with a sheet as well. If the arm of the robot consisted of metal components, a die in the press would be severely damaged. If the arm consisted of non-metal, easily deformable materials, damage of the die in the press would be far lesser.

Effect of all these solutions is still largely limited. Still there is a fact that an industrial robot and manipulator must be able to carry its own weight itself.

The aim of this invention is reduction of the disadvantages stated above and achievement of the most favourable manipulator rigidity to weight ratio.

### Subject Matter of the Invention

The subject matter of the manipulator consisting of an arm consisting of at least one member movably connected to a frame is in the fact that a member of the manipulator arm is created of a membrane the cavity of which is filled with medium of higher or lower pressure regarding the ambient environment; the member is equipped with a joint for connecting with another member or frame. The membrane is equipped with at least one place of curvature change and/or a place of rigidity change and/or a fixed swivel joint and/or a solid sliding guide. The fixed swivel joint is equipped with a rotary drive or a sliding drive and the sliding guide is equipped with a drive.

A member of the manipulator arm is an element filled with medium of higher pressure than the pressure of ambient environment, eventually filled with reinforcing elements, or an element filled with medium of lower pressure than the pressure of ambient environment with cavity filled with reinforcing elements.

At least one of the members of the manipulator arm can be constructed as a combination of at least one element filled with medium of higher pressure than the pressure of ambient environment and at least one element filled with medium of lower pressure than the pressure of ambient environment. Places of rigidity change are positioned outside the area of the flexible joint along one or both sides of the membrane and can be equipped with a sleeve to increase the effect of the flexible joint.

The membrane is equipped with at least one flange for fixing to the frame or to an adjacent member or for fixing an end effector and is connected with outer fibers and/or inner fibers the second ends of which are connected to drives of the fibers. Outer and/or inner fibers pass possibly through passes on the surface of the membrane.

Individual members of the manipulator arms can be positioned side by side, whereas one of their ends is connected to a common flange of the end effector and the second end is connected to another member or frame. In the cavity of each membrane there is a measuring member; positions of individual members of the manipulator arm are measured regarding each other or the frame. Number of fibers for control of the manipulator arms is higher than number of degrees of freedom of the joints between individual members of the arms or between the members and the frame.

Advantage of the invention being described is an increase of rigidity to weight ratio and construction slenderness, usage of flexible joints without clearance and hysteresis at industrial robots and manipulators. Moreover, this construction of the industrial robots and manipulators is easily deformable in a case of breakdown, e.g. in the case of collision with a press. The suggested solution concept of measuring inside the members of the manipulator arms solves the problem of measuring and controlling the position of the end effector of an industrial robot and manipulator with flexible joints. Another advantage is separation of areas of tension and compression stress in the construction of the industrial robots and manipulators in combination with flexible joints. The fact that a part of buckling stress in the construction is replaced with tensile stress effecting in the membrane, which is constructed of fiber composites and filler that cannot be penetrated by air and a medium, is favorable as well.

### Review of the Figures in the Drawings

In the attached figures there are schematic embodiments of constructions of the manipulator according to the invention, where:
in Fig. 1 there is a basic embodiment of a member of the manipulator arm with an inflated element,
in Fig. 2 there is a basic embodiment of a member of the manipulator arm with a deflated element,
in Fig. 3 there is an alternative embodiment to Fig. 1,
in Figs. 4 to 11 there are alternative embodiments of members of the manipulator arms with various positioning of places of rigidity change,
in Figs. 12 to 17 there are alternative embodiments of members of the manipulator arm with a combination of elements or parts in one member of the manipulator arm,
in Figs. 18 to 24 there are alternative embodiments of members of the manipulator arm equipped with inserted sleeves or connecting flanges, eventually with joints,
in Figs. 25, 26 there are alternative embodiments of members of the manipulator arm with a sliding guide between the members of the arm,
in Figs. 27 and 28 there are alternative embodiments of members of the manipulator arm with various positioning of places of rigidity change,
in Figs. 29 and 30 there are other possible alternative embodiments of members of the manipulator arm,
in Figs. 31 to 36 there are members of the manipulator arm equipped with control fibers,
in Figs. 37 and 38 there is a manipulator with three members of the manipulator arm with serial sequencing,
in Figs. 39 and 40 there is the manipulator arm with rotational drive between two of its members,
in Figs. 41 and 42 there is the manipulator arm with a sliding drive between two of its members,
in Figs. 43 and 44 there is a manipulator with three members of the manipulator arm with parallel sequencing,
in Figs. 45 there is a three-dimensional design, resp. a model, of a manipulator or industrial robot and
in Fig. 46 there is the manipulator arm with an integrated measuring device for measuring positions of the individual members of the manipulator arm regarding each other.

### Examples of Embodiments of the Invention

For all the embodiments of the invention described below each manipulator arm consists of at least one member, namely element 1 or element 6, the outer surface of which is created of the membrane 2. The cavity of the membrane is filled with medium of higher or lower pressure than the pressure of ambient environment; in the case of using medium with lower pressure than the pressure of ambient environment there are reinforcing elements 7 implemented in the cavity of the membrane 2. Each member has a flexible or joint connection with the frame 22 or with another member of the manipulator arm. For all the embodiments the main aim is to achieve the most favorable rigidity to weight ratio of the manipulator.

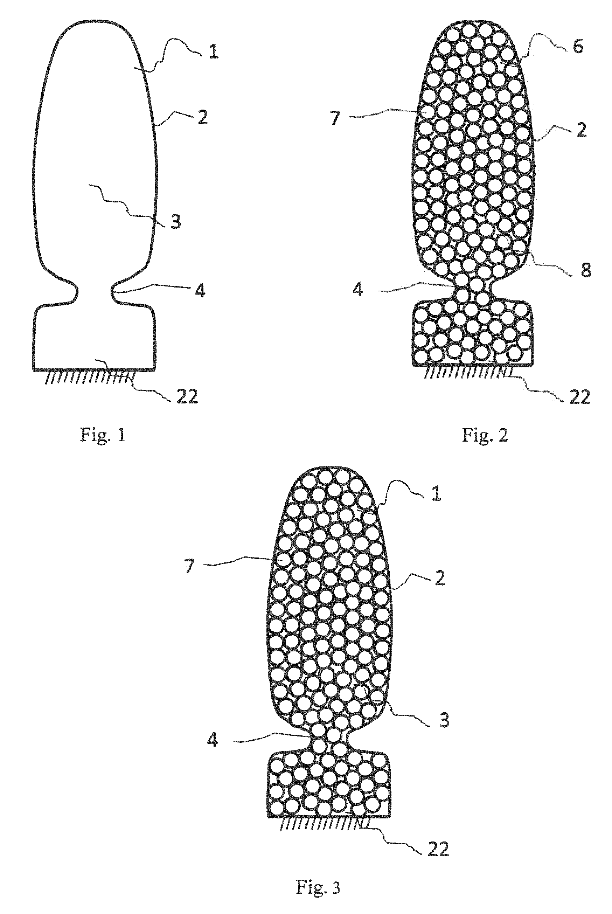

In Fig. 1 there is a schematic depiction of the embodiment of the manipulator the arm of which consists of one element 1, its cavity is filled - inflated with medium 3 of higher pressure than the pressure of ambient environment. The bottom part of the element 1 is equipped with a place of rigidity change 4 which creates a flexible joint and at its end it is connected to the frame 22. The membrane 2 is made of elastic material with good tensile strength, e.g. from carbon fibers with PVC filler. The medium 3 of higher pressure can consist of compressed air, but also of different fluid or flexible foam.

In Fig. 2 there is a schematic depiction of the embodiment of the manipulator the arm of which consists of one element 6, its cavity is deflated, resp. sucked with the help of the medium 8 of lower pressure than the pressure of ambient environment. Analogically to the embodiment depicted in Fig. 1, the bottom part of the element 6 is equipped with a place of curvature change 4 which creates a flexible joint and its end is connected to the frame 22. There are reinforcing elements 7 in the cavity of the element 6 to ensure the shape of the element 6 after its deflation. The reinforcing elements 7 are resistant to buckling stress in the element 6. The membrane 2 is made of elastic material with good tensile strength, e.g. from carbon fibers with PVC filler. The medium of lower pressure can consist of compressed air, but also of different fluid or flexible foam with underpressure. The reinforcing elements 7 inside the deflected element 6 can consist of balls of elastic material which can be hollow or filled.

In Fig. 3 there is a schematic depiction of the alternative embodiment of the manipulator with the inflated element 1 that is filled with the reinforcing elements 7. The reinforcing elements are resistant to buckling stress as in Fig. 2, too.

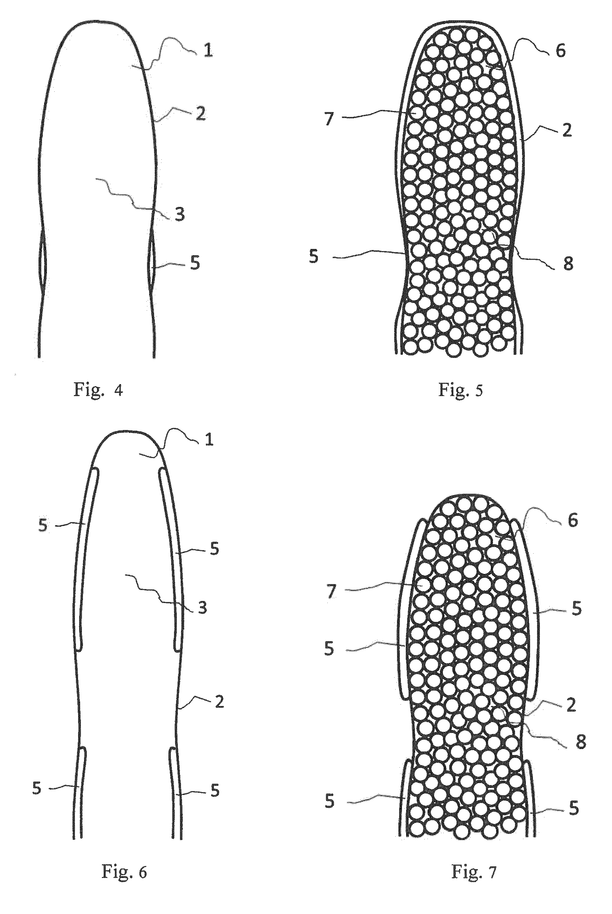

In Fig. 4 there is a schematic depiction of the alternative embodiment of the manipulator with the inflated element 1 where the place of curvature change 4, as it is evident from fig. 1, is replaced with a place of rigidity change 5 for connecting to a frame or to another element. In the place of rigidity change 5 the rigidity can be increased as well as decreased.

In Fig. 5 there is a schematic depiction of the alternative embodiment of the manipulator with the deflated element 6 where the place of curvature change 4, as it is evident from fig. 2, is replaced with a place of rigidity change 5 for connecting to a frame or to another element. In the place of rigidity change 5 the rigidity can be increased as well as decreased.

In Fig. 6 there is a schematic depiction of the alternative embodiment of the manipulator with the inflated element 1 where parts of the membrane 2 surface are equipped with places of rigidity change 5. In this case there is rigidity increase, whereas parts of the membrane 2 surface with no rigidity change become flexible joints for connecting to a frame or to another member of the manipulator.

In Fig. 7 there is a schematic depiction of the embodiment of rigidity change of the membrane 2 surface analogical to Fig. 6, in this case for a manipulator arm with the deflated element 6.

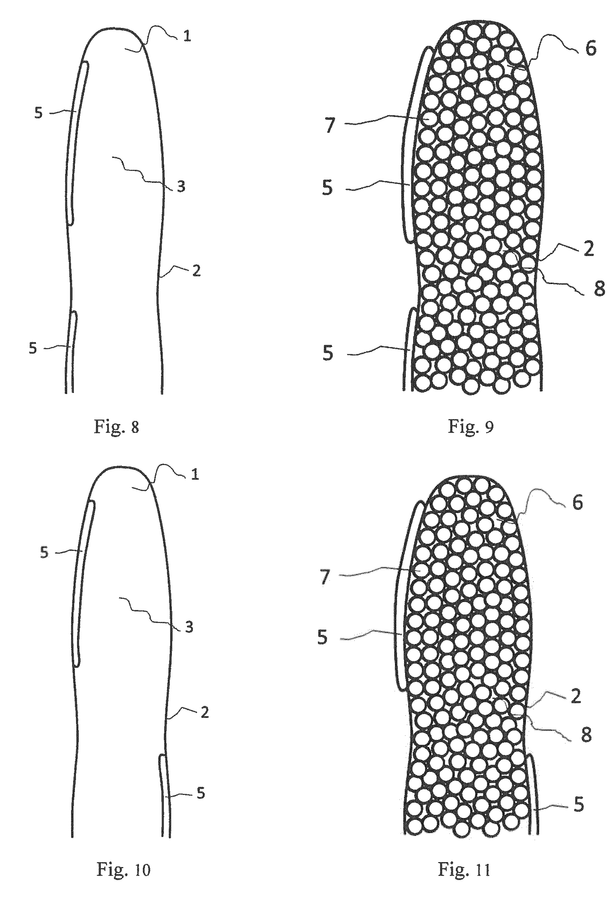

According to Fig. 8, contrary to the embodiment in Fig. 6, there is an asymmetric rigidity change of the membrane 2 surface; this rigidity change is designed only on one side of the membrane 2 surface. Analogically, in Fig. 9 the rigidity change is performed on the deflated element 6.

The alternative asymmetric embodiment of rigidity change of the membrane surface is evident in figures 10 and 11 where the rigidity change of the membrane 2 surface occurs alternatively on one and then on the second side of the membrane 2. Places with no rigidity increase on the membrane 2 surface on the opposite sides become flexible joints between individual parts of the inflated element 1- Fig. 10, or the deflated element 6-Fig. 11.

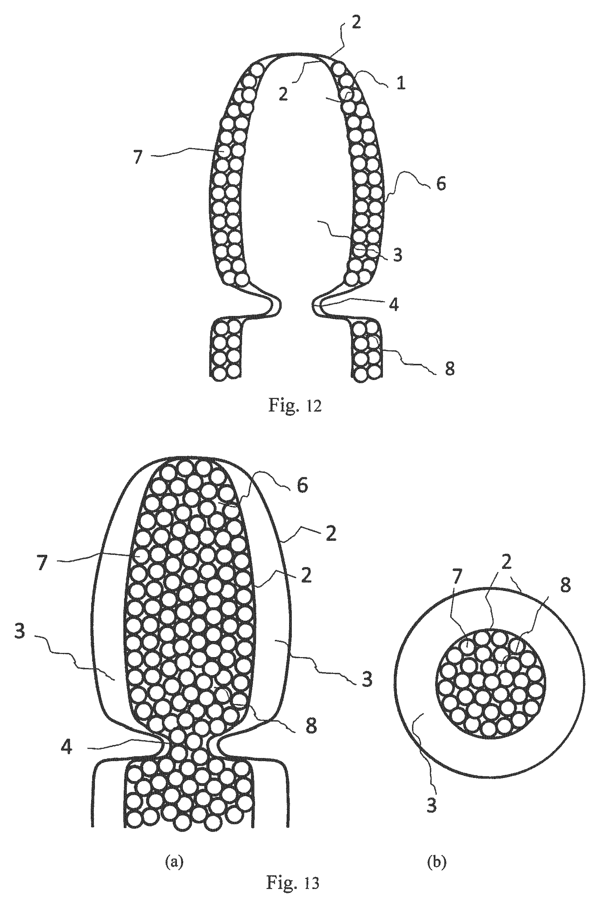

In Fig. 12 to 17 there are schematic depictions of other embodiments of the manipulator arms where the individual members of the manipulator arms are constructed as a combination of the inflated element 1 and the deflated element 6.

According to Fig. 12 the deflated element 6 is positioned on the surface of the inflated element 1, resp. it is wrapped; the result is an increase of overpressure in the inflated element 1 and more intensive concentration of the flexible joint in the place of curvature change 4, which is, at the same time, a place of decreased rigidity.

According to Fig. 13a, contrary to the Fig. 12, there is the inflated element 1 positioned on the surface of the deflated element 6. This positioning provides an increasing effect of underpressure in the deflated element 6 caused by the inflated element 1. A more intensive concentration of the flexible joint in the place of curvature change 4, which is, at the same time, place of decreased rigidity, occurs here as well. In addition to the schematic depiction in Fig. 13a, there is a section of the inflated element 1 combined with the deflated element 6 depicted in Fig. 13b.

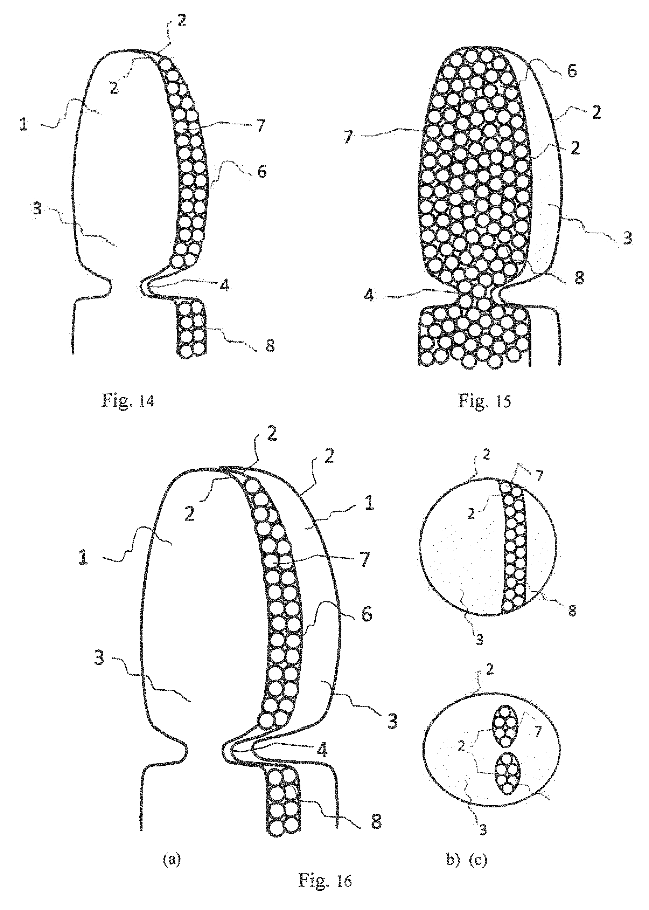

In Fig. 14 there is an alternative arrangement of the embodiment in Fig. 12 schematically depicted, in which the combination of the inflated element 1 with the deflated element 6 is only on one side of the membrane 2.

In Fig. 15 there is an alternative arrangement of the embodiment in Fig. 13 schematically depicted, in which the combination of the inflated element 1 with the deflated element 6 is only on one side of the membrane 2.

In Fig. 16a there is another alternative embodiment of the arm schematically depicted, this one is with the deflated element 6 asymmetrically positioned inside the inflated element 1, which can possibly be divided into two parts of various inner pressure.

In addition to the schematic depiction in Fig. 16a, in Fig. 16b and 16c there is a section of the inflated element 1 combined with the deflated element 6 depicted. Two alternative shapes in cross section are depicted. In Fig. 16b there is the space of the inflated element 1 divided into two parts by the deflated element 6; each of these parts can be filled with medium of different pressure. On the contrary, in Fig. 16c one inflated element 1 includes two deflated bodies 6 inside, possibly of different pressures.

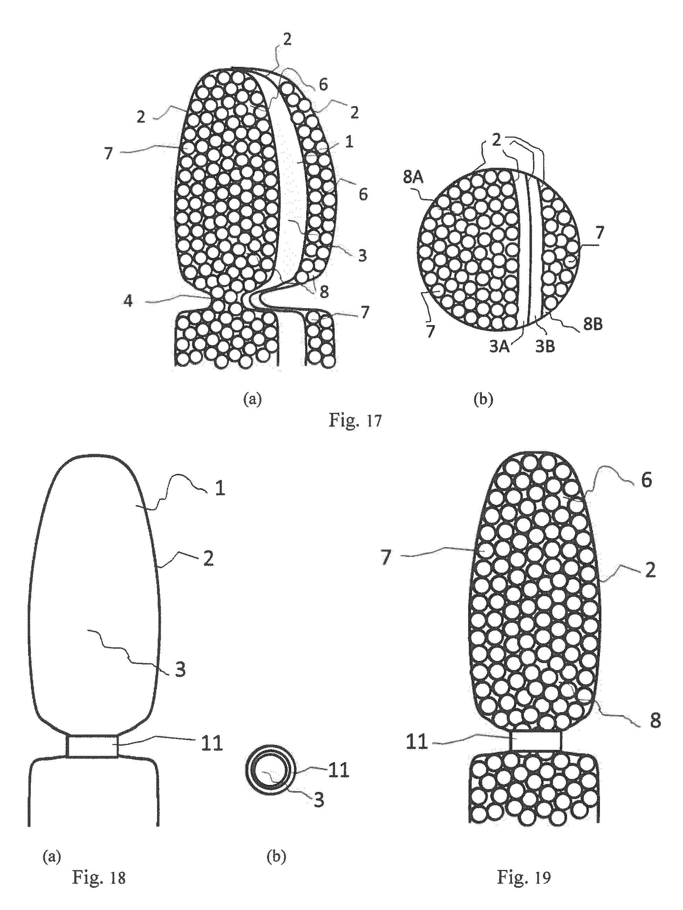

In Fig. 17a an alternative embodiment to the one shown in Fig. 16 can be seen, but here the inflated element 1 is positioned inside the deflated element 6. As it is evident from Fig. 17b there can be four different areas with different overpressures 3A and 3B and different underpressures 8A and 8B.

In Fig. 18 and 19 there are schematic depictions of embodiments of the manipulator arm alternative to the embodiments in figures 1 and 2, where places of rigidity change 4 are equipped with inserted sleeve 11, which causes large local change of curvature and rigidity. Section in the place of the inserted sleeve 11 can be seen in Fig. 18b.

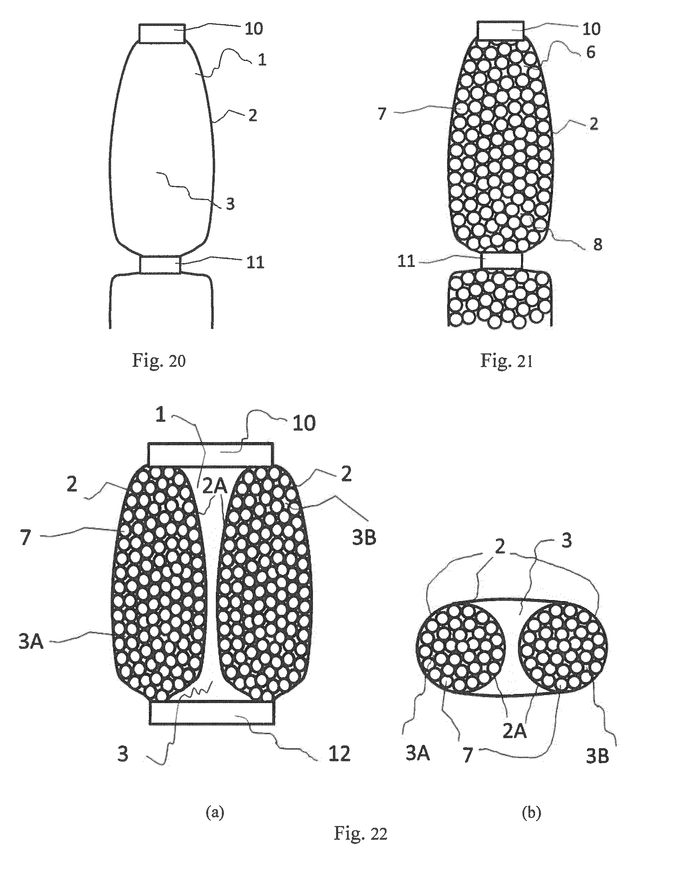

In Fig. 20 and 21 there are schematic depictions of an alternative embodiment of the manipulator arm, where the inflated element 1 or the deflated element 6 is equipped with the end effector flange 10, which enables gripping a body by the manipulator or acting upon a body with the help of a chosen tool.

In Fig. 22a there is a schematic depiction of an alternative embodiment of the manipulator arm with three inflated bodies 1, where inside one of the inflated bodies 1 there are the other two inflated bodies 1 with medium of the 3A pressure and with medium of the 3B pressure inserted and are filled with reinforcing elements 7, whereas all three inflated bodies 1 are of the same medium pressure because they are divided with the membranes 2A, which are permeable for the pressure medium. In Fig. 22b there is a section of this embodiment depicted.

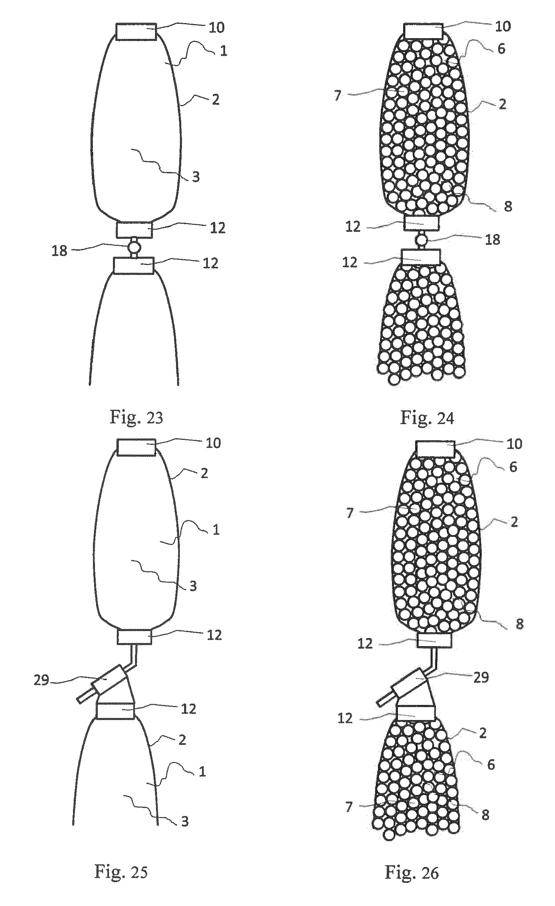

In Figs. 23 and 26 there are schematic depictions of alternative embodiments of the manipulator arm where its individual members are equipped with flanges 12 for their connection to each other. The flanges 12 enable to connect the members of the manipulator arm as common kinematic pairs, in this case with a rotational joint or with a spherical joint 18 (as it can be seen in Figs. 23 and 24) or with a sliding guide 29 (as it can be seen in Figs. 25 and 26).

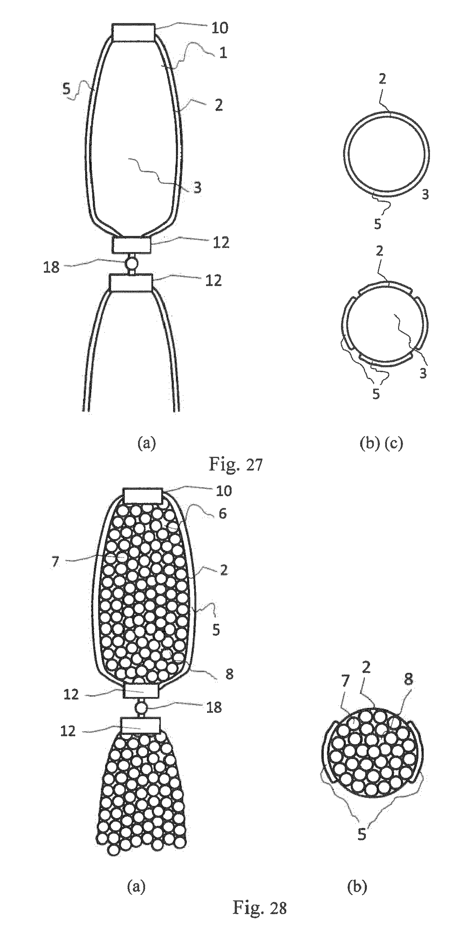

In Figs. 27a and 28a there are schematic depictions of alternative embodiments of the manipulator arm where the arms are connected to common fixed joints, in this case by rotational or spherical joints 18 and the membranes 2 are reinforced with places of increased rigidity 5 going from one flange 10 or 12 to the other flange 10 or 12, possibly 9 (not shown in the figure). Flexible joints are not used here, but only typical fixed joints. Places of increased rigidity 5 can be compact or divided by various ways, as it can be seen in the sections in figures 27b , c and 28b.

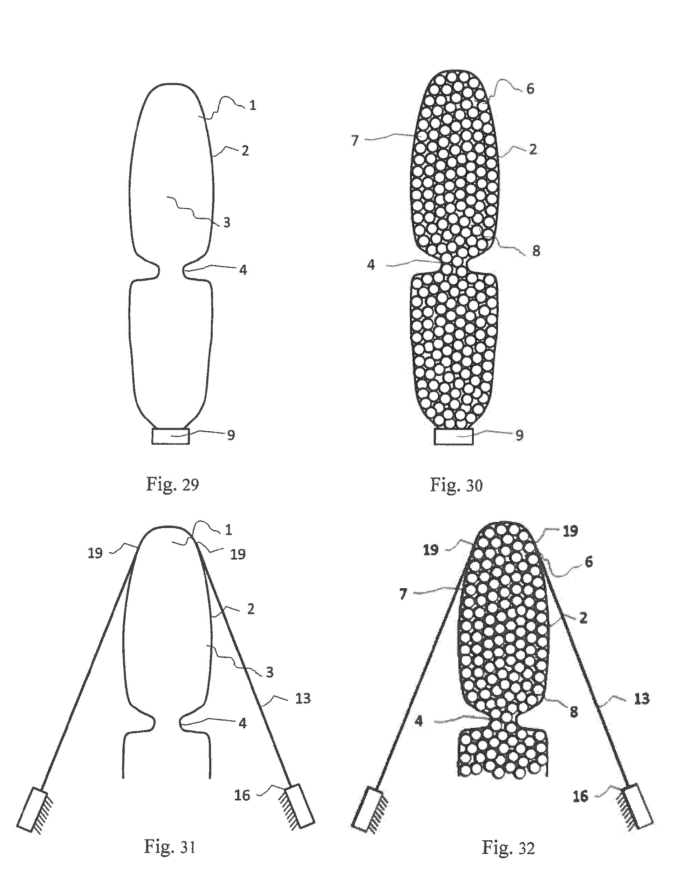

In Fig. 29 and 30 there are schematic depictions of alternative embodiments of the manipulator arm where the inflated element 1 or the deflated element 6 is equipped with the flange 9 for connecting the frame. The flange 9 provides secure fixing of the manipulator arm to the frame.

In Fig. 31 and 32 there is a schematic depiction of an embodiment of the drive of the manipulator arm with outer fibers 13 that are at one end fixed to places 19 on the outer surface of the inflated element 1 or the deflated element 6 and on the other end they are fixed to the drives 16 (e.g. to linear electric motors). Number of the outer fibers 13 is larger than number of degrees of freedom of the manipulator arm. In this case of uniplanar motion of the manipulator arm created by a flexible rotational joint with one degree of freedom two fibers are used.

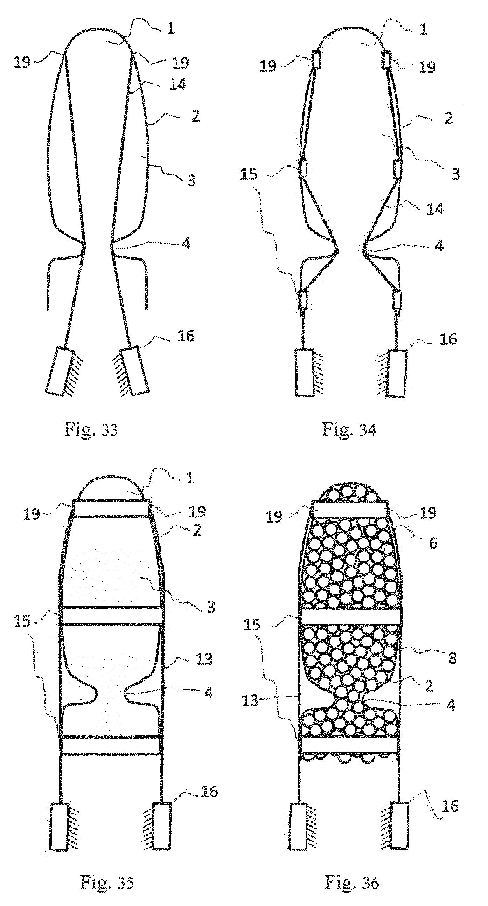

At the embodiment of the manipulator arm in Fig. 33 there is a schematic depiction of an embodiment of the drive of the manipulator arm with inner fibers 14 that are at one end fixed to places 19 on the inner surface of the inflated element 1 and on the other end they are fixed to the drives 16. Number of the inner fibers 14 is larger than number of degrees of freedom of the manipulator arm in this case as well. In this case of uniplanar motion of the manipulator arm created by a flexible rotational joint with one degree of freedom two fibers are used.

In Fig. 34 a guide of the inner fibers 14 along the inner surface of the inflated element 1 can be seen, the fibers pass through the passes 15 positioned on the inner surface of the element 1.

The guide of the outer fibers 13 along the outer surface of the inflated element 1 or the deflated element 6 is created as an arrangement of passes 15 along the outer surface of the inflated element 1 or the deflated element 6, as it is evident from Figs. 35 and 36.

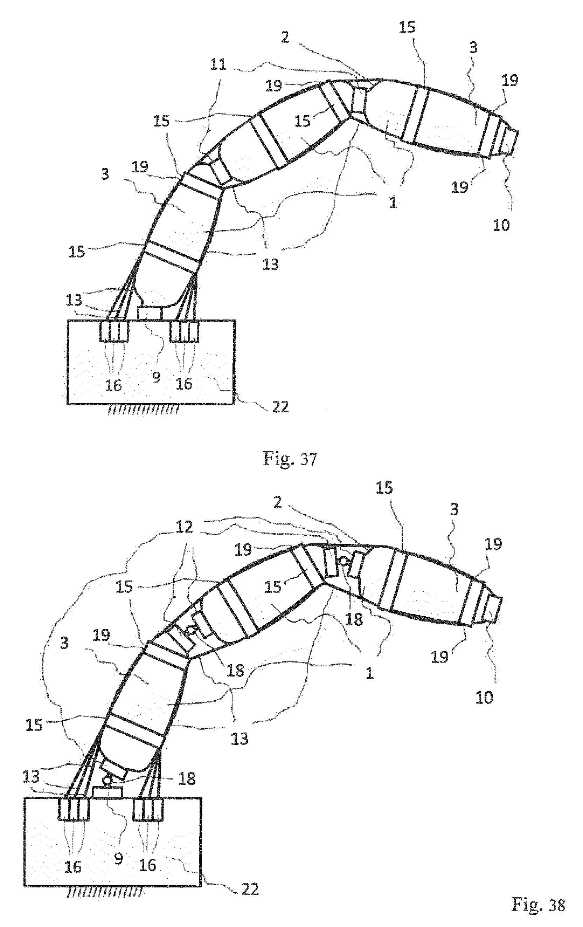

In Fig. 37 there is a schematic depiction of an example of embodiment of a manipulator or an industrial robot the arm of which consists of three inflated bodies 1 and is equipped with the end effector flange 10, the flange 9 for fixation to the frame 22, inserted sleeves 11 and drives 16 that are controlled by the outer fibers 13. A uniplanar industrial robot or a manipulator or a projection of a three-dimensional industrial robot or a manipulator with serial kinematic structure with rotational joints can be considered as this embodiment.

In Fig. 38 there is a schematic depiction of the embodiment of the manipulator analogical to the example in Fig. 37 but with utilization of common fixed joints, in this case with rotational or spherical joints 18.

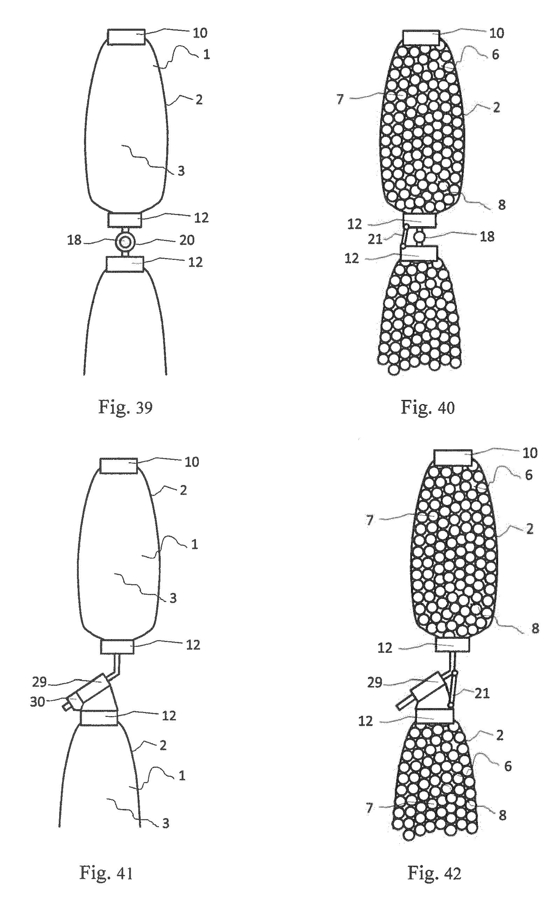

In Fig. 39 there is a schematic depiction of an embodiment of the drive of the manipulator arm with rotational drive 20 in the joint 18 that is represented e.g. by an electromotor. In this case the arm with the inflated element 1 is depicted; this embodiment is analogically possible for the arm with the deflated element 6.

In Fig. 40 there is a schematic depiction of an embodiment of the drive of the manipulator arm with rotational or spherical joint 18, with the sliding drive 21 that is represented e.g. by a hydraulic cylinder. In this case the arm with the deflated element 6 is depicted; this embodiment is analogically possible for the arm with the inflated element 1.

In Fig. 41 and 42 there are schematic depictions of an embodiment of the drive of the manipulator arm with a sliding guide 29 with the drive 30 of the sliding guide 29, e.g. with a screw and a nut, or with a sliding drive 21, e.g. a hydraulic cylinder.

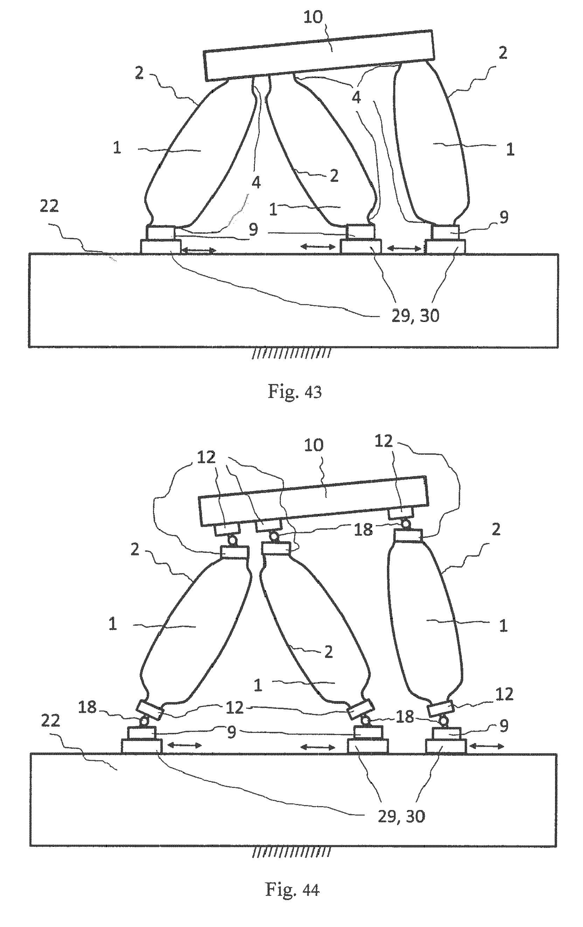

In Fig. 43 there is another example of an embodiment of the manipulator consisting of three manipulator arms aligned side by side schematically depicted, in this case represented by inflated bodies 1 equipped with the end effector common flange 10 and flanges 9 for fixing to the frame 22. Flanges 9 consist of carts controlled by the drives 30 of the sliding guides 29. There are the inflated bodies 1 at both the ends which are equipped with places of curvature change 4 which represent equivalent to the rotation joints between the inflated element 1 and the flange 9 for fixing to the frame 22 and with the end effector flange 10. Each of these arms can consist of more bodies 1 or 6. Fig. 43 can represent either planar industrial robot or manipulator or a projection of an industrial robot or manipulator with parallel kinematic structure the arms of which slide on the frame and are equipped with rotational joints on both ends.

In Fig. 44 there is a schematic depiction of an embodiment of the manipulator analogical to the example in Fig. 43 but with utilization of common fixed joints; in this case with the rotational or spherical joints 18 and with the sliding guides 29 and the drives 30, represented e.g. by linear electrical drives.

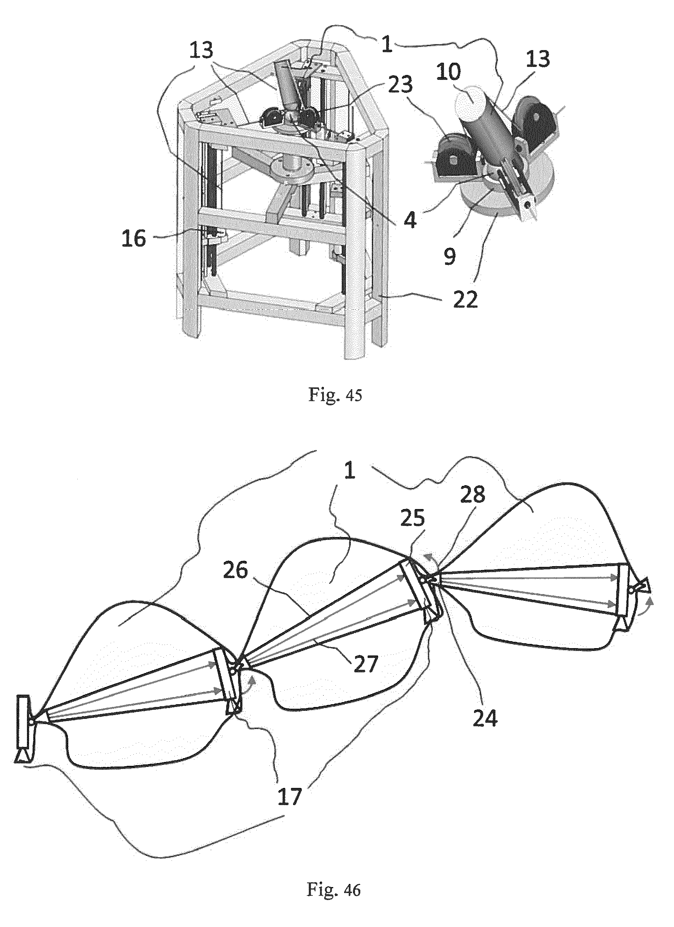

In Fig. 45 there is an example of a manipulator depicted for which the embodiment of the inflated element 1 is evident, the element is equipped with the end effector flange 10, the flange 9 for fixing to the frame and with three outer fibers 13 that are guided through trolleys 23 to the carts which represent the sliding drives 16 on vertical guides.

In Fig. 46 there is a schematic depiction of the manipulator arm with three members where there is a measuring member 17 in the cavity of each member for measuring the positions of individual arm members, the inflated bodies 1 or the deflated bodies 6, regarding each other. The measuring member 17 consists of the rotational joint 24 which is rotationally connected to a photosensitive plate 25 and is positioned in the place of large curvature change 4. The rotational joint 24 is always equipped with a device for rotation measurement 28 and is connected to a funnel 26 with another photosensitive plate 25, whereas inside the funnel 26 there are laser diodes positioned, these diodes transmit multiple laser beams 27 which impinge on the next photosensitive plate 25. The photosensitive plate 25 can consist of CCD or PSD member measuring positions of the incoming laser beams 27. When it comes to rotation in the place of large curvature change 4, which represents a flexible joint, it comes to rotation of rotational joints 24 of the measuring member 17 together with the connected funnel 26 which ensures that the laser beams 27 always come on the photosensitive plate 25, where it is possible to measure the position of their impingement. From the measured rotation of the rotational joint 24 with the funnel 26 regarding the photosensitive plate 25 and from the measured positions of impingement of the multiple laser beams 27 on the photosensitive plate 25, a position of the members of the manipulator arm regarding each other, that is represented by the position of the rotational joints 24 to each other, can be determined. The position is determined by relative rotation in flexible joints and by relative displacement originated from deformation of members of the manipulator arm.

Control of the drives 16 and/or 20 and/or 21 and processing the measurements from measuring members 17 is performed by a computer.

## Claims

1. A manipulator containing an arm consisting of at least one member movably connected to a frame **characterized in that** a member of the manipulator arm is created by a membrane (2) the cavity of which is filled with medium of higher or lower pressure with respect to the ambient environment and equipped with a joint for connecting with another member or frame (22).

2. The manipulator, according to the claim 1 **characterized in characterized in** featured by the fact that the membrane (2) is equipped with at least one place of curvature change (4) and/or a place of rigidity change (5).

3. The manipulator, according to the claim 1 **characterized in that** the joint for connecting with another member or frame (22) is created by a fixed swivel joint (18) and/or a fixed sliding guide (29).

4. The manipulator, according to the claim 3 **characterized in that** the joint (18) is equipped with a rotational drive (20) or with a sliding drive (21) and/or the sliding guide (29) is equipped with a drive (30) of the sliding guide (29) or with the sliding drive (21).

5. The manipulator, according to one of the abovementioned claims **characterized in that** a member of the manipulator arm is created by the element (1) filled with medium of higher pressure than the pressure of ambient environment.

6. The manipulator, according to the claim 5 **characterized in that** the element (1) which is filled with medium of higher pressure than the pressure of ambient environment is, at the same time, filled with reinforcing elements (7).

7. The manipulator, according to one of the abovementioned claims **characterized in that** a member of the manipulator arm is created by the element (6) filled with medium of lower pressure than the pressure of ambient environment, while its cavity is filled with reinforcing elements (7).

8. The manipulator, according to one of the abovementioned claims **characterized in that** at least one of the members of the manipulator arm is constructed as a combination of at least one element (1) filled with medium of higher pressure than the pressure of ambient environment and at least one element (6) filled with medium of lower pressure than the pressure of ambient environment.

9. The manipulator, according to one of the abovementioned claims **characterized in that** the places of rigidity change (5) are positioned outside of the flexible joint area along one or along both sides of the membrane (2).

10. The manipulator, according to one of the abovementioned claims **characterized in that** the membrane (2) is equipped with a sleeve (11) in places of curvature change (4) and/or of rigidity change (5) for enhancing the effect of the flexible joint.

11. The manipulator, according to one of the abovementioned claims **characterized in that** the membrane (2) is equipped with at least one of the flanges (9, 10, 12) for fixation to the frame (22) or to an adjacent member or for fixation of the end effector.

12. The manipulator, according to one of the abovementioned claims **characterized in that** the membrane (2) is connected to the outer fibers (13) and/or inner fibers (14), the second ends of which are connected to drives (16) of the fibers.

13. The manipulator, according to one of the abovementioned claims **characterized in that** the outer and/or inner fibers (13, 14) are passing through the passes (15) on the surface of the membrane (2).

14. The manipulator, according to one of the abovementioned claims **characterized in that** individual members of the manipulator arms are positioned side by side, whereas one of their ends is connected to the end effector common flange (10) and the other ends are connected to other members or to the frame (22).

15. The manipulator, according to one of the abovementioned claims **characterized in that** in each membrane cavity there is a measuring member (17) and positions of individual members of the manipulator arm regarding each other or the frame (22) are measured.

16. The manipulator, according to one of the abovementioned claims **characterized in that** number of the fibers (13, 14) for control of the joints of members of the manipulator arms created by the place of curvature change (4) and/or by the place of rigidity change (5), and/or the rotational joint (18, 29) is larger than number of degrees of freedom of joints between the individual members of the arms or between the members and the frame.
